# EUROPEAN PATENT SPECIFICATION

(11) **EP 2 567 643 B1**
(45) Date of publication and mention of the grant of the patent: **19.11.2014**
(21) Application number: 11835509.8
(22) Date of filing: 25.05.2011
(51) Int. Cl.: A47J 31/44

(54) **TEA MACHINE BASE, CONTROL METHOD THEREOF AND TEA MACHINE**
BASIS FÜR EINEN TEEKOCHER, STEUERVERFAHREN DAFÜR UND TEEKOCHER
BASE DE MACHINE À THÉ, SON PROCÉDÉ DE COMMANDE ET MACHINE À THÉ

(30) Priority: 29.10.2010 CN 201010527538
(43) Date of publication of application: 13.03.2013
(73) Proprietor: Crastal Technology (Shenzhen) Co., Ltd., Shenzhen, Guangdong 518055 (CN)
(72) Inventor: ZHANG, Bei, Guangdong 518055 (CN); CHEN, Huajin, Guangdong 518055 (CN)
(74) Representative: ProI European Patent Attorneys
(86) International application number: PCT/CN2011/074618
(87) International publication number: WO 2012/055235

(56) References cited:
- CN-A- 1 509 978
- CN-A- 102 058 320
- CN-U- 201 452 889
- CN-U- 201 452 889
- CN-Y- 2 326 137
- CN-Y- 2 326 137
- DE-B3-102006 060 748
- FR-A1- 2 605 206
- FR-A1- 2 605 206
- JP-A- 9 164 079
- KR-A- 20060 040 413

## Description

### Field of Invention

The present invention relates to a tea machine, and more particular to a tea machine base and its control method thereof, especially for the tea machine with the tea machine base thereof.

### Description of Related Arts

A conventional tea machine base generally comprises a base body, a dripping tray, and a grid panel, wherein the dripping tray and the grid panel are coupled at the base body. In particular, the grid panel is positioned above the dripping tray. Accordingly, a tea pot and tea cups are placed on the grid panel for the use of brewing tea. During the brewing process, the water dripped out from the tea cups and/or the tea pot will be collected by the dripping tray through the grid panel.

However, the conventional tea machine base does not provide multiple functions and is considered as a low end apparatus. Therefore, there is a need for the tea machine base to provide multiple functions and to significant upgrade the quality of the tea machine base in the market.

Several tea machine bases are known from DE 10 2006 060748 B3, FR 2 605 206 A1, CN 2 326 137 Y, and CN 201 452 889 U.

### Summary of the Present Invention

According to the deficiencies in the prior arts, it is advantageous to provide a tea machine base and its control method thereof, which provides multiple functions and significant upgrades the quality of the tea machine base.

According to the deficiencies in the prior arts, it is advantageous to provide a tea machine base which is adapted to automatically detect whether any tea cup is placed on the tea machine base.

According to the deficiencies in the prior arts, it is advantageous to provide a tea machine which is adapted for automatically filling water and discharging water.

Advantages and features of the invention will become apparent from the description which follows, and may be realized by means of the instrumentalities and combinations particular point out in the appended claims.

A tea machine base of a tea machine may comprise an electric motor, a turntable, and a supporting shaft, wherein a supporting platform is formed at the top side of the supporting shaft. A bottom side of the supporting shaft is upwardly extended from a bottom side of the tea machine base. The turntable is coaxially coupled at the supporting shaft. The turntable further comprise at least two cup holders formed thereon in a radial direction and a plurality of positioning contact terminals, wherein the number of cup holders matches with the number of positioning contact terminals. A positioning switch is provided at the supporting platform corresponding to the positioning contact terminal. The turntable is driven to rotate by the electric motor.

The operational configuration of the tea machine base above is that when the electric motor is activated to drive the turntable to rotate, the tea cup on the cup holder will be driven to move correspondingly. During the rotation of the turntable, the positioning contact terminal is moved to alignedly contact with the positioning switch in order to stop the rotation of the turntable so as to move the tea cup at a desired position. Therefore, when the tea machine incorporates with the tea machine base, the tea machine can automatically dispense the brewed tea to the tea cup in a corrected alignment. In other words, the tea machine can be supported on the supporting platform for dispensing the brewed tea from the tea machine to the tea cup on the tea machine base. In particular, the turntable is rotatable and the supporting platform is stationary.

Furthermore, the turntable is driven to rotate by the electric motor by a belt transmission unit, a gear transmission unit, or a chain transmission unit.

In addition, the belt transmission unit comprises a driven gear, a driving gear and a driving belt having a V-shaped cross section. The driven gear is coaxially coupled at the supporting shaft, wherein a top side of the driven gear is coupled with the turntable. The driving gear is operatively coupled at an output shaft of the electric motor. Alternatively, the gear transmission unit transmits the output power by the transmission gears at same planar direction (involute gear transmission). Alternatively, the chain transmission unit transmits the output power via an endless roller chain.

Accordingly, the tea machine base further comprises a supporting base, wherein the bottom side of the supporting shaft is upwardly extended from the supporting base. A ball bearing is provided between the driven gear and the supporting base.

Accordingly, an axle bearing is provided between the driven gear and the supporting shaft. In particular, the axle bearing is provided between the contact surfaces between the driven gear and the supporting shaft.

Furthermore, the tea machine base further comprises a tea cup which comprises a permanent magnet provided at the bottom side of the tea cup. A magnetic switch, which is preferably an electromagnetic switch, is provided at each of the cup holders, wherein two first terminal heads are extended from the magnetic switch to a surrounding sidewall of the turntable. Correspondingly, a plurality of second terminal heads are provided at the surrounding sidewall of the supporting platform to match and contact with the first terminal heads.

Accordingly, the cup holding bases are formed on the top side of the turntable, wherein the cup holders are supported at the cup holding bases respectively. The turntable further comprise a supporting post upwardly extended from the cup holding base, a pivot arm pivotally coupled at the supporting post, and an actuating member movably supported at the cup holder, wherein one end of the pivot arm is contacted with and supported underneath the actuating member to define an actuating end, and an opposed end of the pivot arm provided with a magnetic element, such as magnet, to form a magnetic end. In other words, the pivot point of the actuating member defines two ends of the actuating member as the actuating end and the magnetic end respectively, wherein the weight of the magnetic end of the pivot arm is heavier than the actuating end thereof. The turntable further comprises a sensor switch provided at the supporting platform.

Preferably, the actuating member is movably supported at the cup holder at a center thereof.

Alternatively, the cup holding bases are formed on the top side of the turntable, wherein the cup holders are supported at the cup holding bases respectively. The turntable further comprises a movable post downwardly extended from the cup holder. The turntable further comprises a guiding member which is downwardly extended from the cup holding base. A resilient element is supported between the guiding member and the cup holding base. The upper end of the guiding member contacts with the bottom end of the movable post. The turntable further comprises a sensor unit supported thereunder for detecting a downward movement of the guiding member. Preferably, the sensor unit comprises a signal transmission unit. Alternatively, the sensor unit comprises a touch switch.

Accordingly, the movable post 141 is downwardly extended from the cup holder at the center thereof. The turntable further comprises a guiding seat supported underneath the cup holding base, wherein the guiding member is coaxially and slidably extended through the guiding seat, wherein the resilient element is disposed in the guiding seat.

In accordance with the invention, the present invention provides a tea machine base according to claim 1 whereas further improvements are prescribed in the dependent claims, The tea machine base comprises a tea machine base, which comprises an electric motor, a turntable, a securing base having a U-shaped cross section. The output shaft of the electric motor is coupled at a center of the turntable. The turntable comprises at least two cup holders provided on the top side of the turntable, and a plurality of positioning contact terminals, wherein the number of positioning contact terminal matches with the number of cup holders. The turntable further comprises a positioning switch provided at the securing base to align with the positioning contact terminal.

Furthermore, the turntable further comprises a supporting handle extended around an outer side of the surrounding wall of the cup holder and a supporting block extended from an inner side of the surrounding wall of the securing base, wherein the supporting handle is supported on the supporting block.

In addition, the tea machine base further comprises at least a tea cup which comprises a permanent magnet provided at the bottom side of the tea cup. A magnetic switch, which is an electromagnetic switch, is provided at the securing base.

A tea machine may be provided with a tea machine base, wherein the tea machine comprises a base support, a water boiling container, a water tank, a tea basket, a tea infusing container, and a tea dispensing outlet. The tea machine base comprises an electric motor, a turntable, and a securing base, wherein a supporting platform is formed at the top side of the supporting shaft. A bottom side of the supporting shaft is upwardly extended from a bottom side of the tea machine base. The turntable is coaxially coupled at the supporting shaft. The turntable further comprise at least two cup holders formed thereon in a radial direction and a plurality of positioning contact terminals, wherein the number of cup holders matches with the number of positioning contact terminals. A positioning switch is provided at the supporting platform corresponding to the positioning contact terminal. The turntable is driven to rotate by the electric motor. The tea machine is supported on the supporting platform, wherein the water dispensing outlet is provided at the bottom of the tea infusing container and is aligned with the cup holder for dispensing brewed tea from the tea infusing container to the tea cup when the tea cup is placed on the cup holder.

A tea machine may be provided with a tea machine base, wherein the tea machine comprises a base support, a water boiling container, a water tank, a tea basket, a tea infusing container, and a tea dispensing outlet. The tea machine base comprises an electric motor, a turntable, and a securing base, wherein a center the turntable is coupled at the output shaft of the electric motor. The tea machine is supported on the supporting platform at the peripheral portion thereof, wherein the water dispensing outlet is provided at the bottom of the tea infusing container and is aligned with the cup holder for dispensing brewed tea from the tea infusing container to the tea cup when the tea cup is placed on the cup holder.

A method of controllably dispensing brewed tea by a tea machine may comprise the following steps.
(1) The turntable is driven to initially rotate via the control circuit.
(2) When the positioning contact terminal contacts with the positioning switch, the turntable will stop rotating. Otherwise, the turntable will keep rotating.

In the step (2), when the positioning contact terminal contacts with the positioning switch, the control circuit will determine whether the tea cup is placed on the cup holder or not. When the tea cup is placed on the cup holder, the brewed tea will be automatically dispensed to the tea cup. After the preset dispensing time, the tea machine will be controlled for stop dispensing the brewed tea to the detected tea cup via the execution signal of the control circuit. After the dispensing process is completed, the turntable is driven to rotate again at one direction for dispensing the brewed tea to the next detected tea cup.

In particular, before dispensing the brewed tea to the tea cup, the tea machine will verify whether the brewing process is completed or not.

In addition, in the step (2), the control circuit will verify whether the turntable is rotated at one full revolution for verifying all positions of the cup holders. If the turntable is not rotated at one full revolution, the turntable is kept rotating until the turntable is stopped at one full revolution.

Furthermore, during the verification of the full revolution of the turntable, the counter of the control circuit will record the activation number of the positioning switch in order to determine whether the turntable is rotated at one full revolution.

Comparing the present invention with the prior arts, the present invention provides the electric motor to drive the turntable to rotate, wherein the rotational movement of the turntable is controlled by the relatively positions between the positioning contact terminals and the positioning switch, so as to control the turntable to rotate or to stop rotating. In other words, the turntable is fully automated to provide multiple functions and significant upgrades the quality of the tea machine base.

Accordingly, when the tea machine is supported on the tea machine base, the control circuit will verify the position of the tea cup, will control the rotation of the turntable, and will controllably dispense the brewed tea to the tea cup on the turntable, so as to enhance the automated functions of dispensing brewed tea to the tea cup and filling up water in the tea machine.

Still further objects and advantages will become apparent from a consideration of the ensuing description and drawings.

These and other objectives, features, and advantages of the present invention will become apparent from the following detailed description, the accompanying drawings, and the appended claims, wherein Embodiments 6 to 9 described below form part of the invention while the other Embodiments represent background technologies which are useful for the understanding of the invention.

### Brief Description of the Drawings

Fig. 1 is a sectional view of a tea machine base of a tea machine according to a first model of the present invention.
Fig. 2 is a sectional view of an electromagnetic switch structure of the tea machine according to the above first model of the present invention.
Fig. 3 is a sectional view of a guiding rib structure of the tea machine according to the above first model of the present invention.
Fig. 4 is a partially sectional view of a tea cup of the tea machine according to the above first model of the present invention.
Fig. 5 is a top view of the tea machine base of the tea machine according to the above first model of the present invention.
Fig. 6 is a sectional view of the tea machine with the tea machine base according to the above first model of the present invention.
Fig. 7 is a sectional view of a tea machine base of a tea machine according to a second model of the present invention.
Fig. 8 is a sectional view of a tea cup detection of the tea machine base according to the second model of the present invention.
Fig. 9 is a sectional view of a tea machine base of a tea machine according to a third model of the present invention.
Fig. 10 is a sectional view of a tea cup detection of the tea machine base according to the third model of the present invention.
Fig. 11 is a sectional view of a tea machine base of a tea machine according to a fourth model of the present invention.
Fig. 12 is a sectional view of a tea cup detection of the tea machine base according to the fourth model of the present invention.
Fig. 14 is a sectional view of a tea machine base of a tea machine according to a fifth model of the present invention.

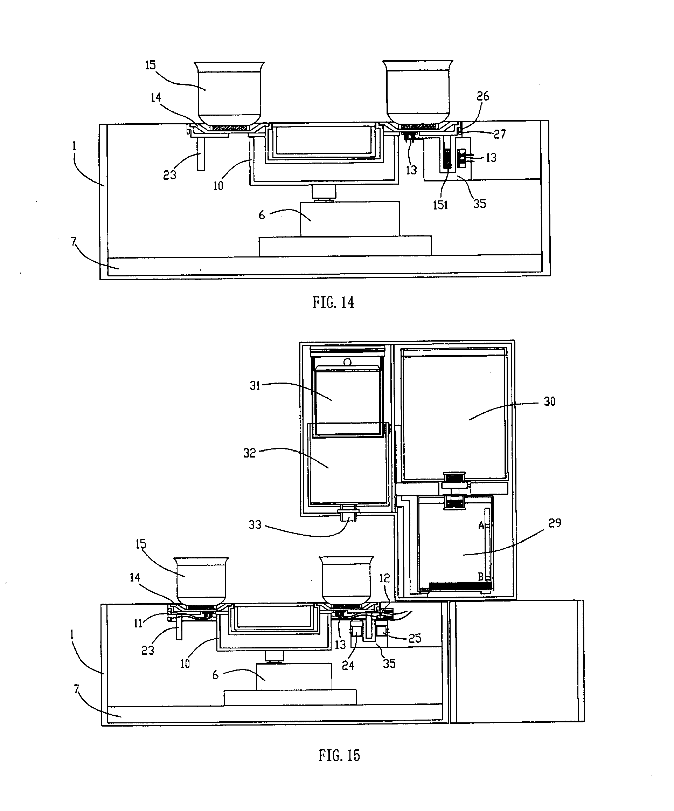

Fig. 14 is a sectional view of a tea machine base of a tea machine according to a sixth model of the present invention.
Fig. 15 is a sectional view of a tea machine base of a tea machine according to a seventh model of the present invention.

### Detailed Description of the Preferred Embodiment

These and other objectives, features, and advantages of the present invention will become apparent from the following detailed description, the accompanying drawings, and the appended claims.

### Embodiment 1

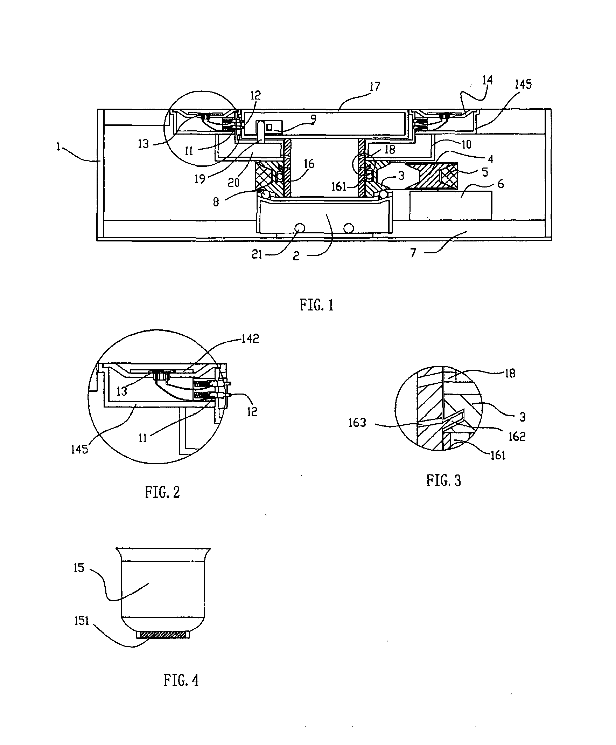

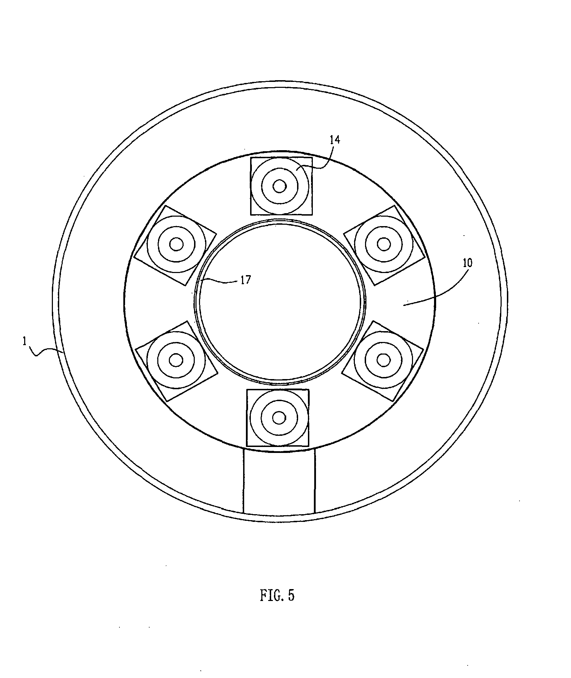

Referring to Figs. 1 and 5 of the drawings, a tea machine base of a tea machine according to a first embodiment of the present invention is illustrated, wherein the tea machine base comprises an outer casing 1, a supporting base 2 supported within the outer casing 1, an electric motor 6 disposed in the outer casing 1, a water reservoir 7 at a bottom side of the outer casing 1, a turntable 10, a supporting shaft 16, and a control circuit. The supporting base 2 is supported on the bottom side of the outer casing 1 (or the supporting base 2 can be integrated with the outer casing 1 at the bottom side thereof), wherein a top side of the supporting base 2 is extended above a top side of the water reservoir 7. In other words, height of the supporting base 2 is larger than the depth of the water reservoir 7. The bottom side of the supporting shaft 16 is coaxially and securely extended from the supporting base 2, wherein a supporting platform 17 is formed at the top side of the supporting shaft 16. The turntable 10 is coaxially and rotatably coupled at the supporting shaft 16. The turntable 10 comprises a plurality of cup holders 14 and a plurality of corresponding contact terminals 19, preferably six cup holders and six contact terminals, wherein a positioning switch 9 is provided at the supporting platform 17 corresponding to the positioning contact terminal 19. The water reservoir 7 is provided at the bottom side of the outer casing 1, wherein a plurality of water outlets 21, preferably four water outlets, are formed at the supporting base 2 to communicate with the water reservoir 7. The turntable 10 is driven to rotate about the supporting shaft 6 by the electric motor 6. According to the preferred embodiment, the turntable 10 is driven to rotate by the electric motor 6 by a belt transmission unit. The belt transmission unit comprises a driven gear 3, a driving gear 4 and a driving belt 5 having a V-shaped cross section. The driven gear 3 is coaxially coupled at the supporting shaft 16, wherein a top side of the driven gear 3 is coupled with the turntable 10. The driving gear 4 is operatively coupled at an output shaft of the electric motor 6. A ball bearing 8 is provided between the driven gear 3 and the supporting base 2. (Since the position of the supporting base 2 is higher the position of the water reservoir 7, the ball bearing 8 at the supporting shaft 16 will not contact with the water in the water reservoir 7.) An axle bearing 161 is provided between the driven gear 3 and the supporting shaft 16. In particular, the axle bearing 161 is provided between the contact surfaces between the driven gear 3 and the supporting shaft 16. Therefore, the friction between the driven gear 3 and the supporting base 2, and the friction between the driven gear 3 and the supporting shaft 16 will be substantially reduced via the ball bearing 8 and the axle bearing 161 respectively so as to effectively enhance the power efficiency of the electric motor 6 and to enhance the stably of the power transmission through the belt transmission unit.

Alternatively, instead of using the belt transmission unit, the turntable 10 is driven to rotate by the electric motor 6 by a gear transmission unit or a chain transmission unit. (Accordingly, in order to drive the turntable 10 to rotate, two transmission gears are operatively coupled to the output shaft of the electric motor 6 and the turntable 10 respectively, wherein the transmission gears are engaged with each other to transmit the output power from the electric motor 6 to the turntable 10.)

As shown in Fig. 2, the turntable 10 further comprise a plurality of cup holding bases 145 integrally formed on the top side of the turntable 10, wherein the cup holders 14 are supported at the cup holding bases 145 respectively. A magnetic switch 13, which is preferably an electromagnetic switch, is provided at each of the cup holders 14, wherein two first terminal heads 11 are extended from the magnetic switch 13 to a surrounding sidewall of the respective cup holding base 145. Correspondingly, a plurality of second terminal heads 12 are provided at the surrounding sidewall of the supporting platform 17 to match and contact with the first terminal heads 11, wherein the second terminal heads 12 are operatively linked to the control circuit. The turntable 10 further has a water collecting chamber 20 provided therein and a plurality of water exits 18, preferably eight water exits. Accordingly, a water passage is formed at the cup holding base 145 to communicate with the water collecting chamber 20. Therefore, the water within the cup holding base 145 will be guided to and collected by the water collecting chamber 20. In addition, after the water is collected in the water collecting chamber 20, the water will be guided to and collected by the water reservoir 7 through the water exits 18 and the water outlets 21.

As shown in Fig. 3, in order to prevent the water leaked through a gap between the turntable 10 and the supporting shaft 16 and leaked to the axle bearing 161 when the turntable 10 is rotated, the supporting shaft 16 comprises at least a guiding rib 162 integrally, radially, and outwardly protruded from an upper portion of the supporting shaft 16 and at least a guiding channel 163 formed at the supporting shaft 16 above the guiding rib 162. Accordingly, when the water leaks through the gap, the water will be guided to flow to the water reservoir 7 through the guiding channel 163. In addition, the guiding rib 162 is extended at an inclined angle from the supporting shaft 16 at a position right above the guiding channel 163 to prevent the water accumulated at the guiding rib 162 and to ensure the water being guided to the guiding channel 163. It is worth mentioning that if the water leaks to the axle bearing 161, the axle bearing 161 will be corrupted.

As shown in Fig. 4, the tea machine base further comprises at least a tea cup 15 which comprises a permanent magnet 151 provided at the bottom side of the tea cup 15. The cup holder 14 further comprises a magnetic member 142, such as an armature, provided thereat corresponding to the permanent magnet 151 of the tea cup 15 when the tea cup 15 is supported on the cup holder 14. In other words, the permanent magnet 151 of the tea cup 15 is magnetically attracted to the magnetic member 142 of the cup holder 14 when the tea cup 15 is supported on the cup holder 14 so as to prevent the tea cup 15 being flipped over by the centrifugal force when the turntable 10 is rotated. In addition, when the tea cup 15 is supported on the cup holder 14, the permanent magnet 151 of the tea cup 15 will also activate the magnetic switch 13 at the cup holder 14. When the first terminal heads 11 are aligned with the second terminal heads 12 to communicatively link with each other, the control circuit will determine the tea cup 15 being supported at the cup holder 14. In other words, the tea machine base further comprises a tea cup detection to determine whether there is the tea cup 15 seated thereon or not. The tea machine base will also determine how many tea cups 15 being seated thereon as well.

The working principle and the operation is shown as follow:

After the tea cup 15 is placed on one of the cup holders 14, the permanent magnet 151 of the tea cup 15 is magnetically attracted to the magnetic member 142 of the cup holder 14, so as to retain the tea cup 15 in position. Therefore, the tea cup 15 will not be unintentionally moved or accidentally flipped over or dropped off the cup holder 14 when the turntable 10 is rotated.

Once the tea cup 15 is placed on one of the cup holders 14, the permanent magnet 151 of the tea cup 15 will also activate the magnetic switch 13 at the cup holder 14 via the magnet field of the permanent magnet 151.

Through the activation of the magnetic switch 13, the electric motor 6 is automatically activated to drive the driving gear 4 to rotate. Then, the driving belt 5 will transmit the rotational power from the driving gear 4 to the driven gear 3 so as to drive the driven gear 3 to rotate. The rotational movement of the driven gear 3 will drive the turntable 10 to rotate. When the positioning contact terminal 19 contacts with the positioning switch 9, the control circuit will deactivate the electric motor 6, such that the turntable 10 will stop rotating. At the same time, the first terminal heads 11 are aligned and contacted with the second terminal heads 12. The magnetic switch 13 will send a signal to the control circuit such that the control circuit will confirm the tea cup 15 being placed on the respective cup holder 14.

Through the manufacturing process, the output power of the electric motor 6 can transmit to the turntable 10 through the belt transmission unit. The belt transmission unit can be replaced by either the gear transmission unit which transmits the output power by the transmission gears at same planar direction or at 3-dimensional directions, or the chain transmission unit. The mechanism of the transmission units can be easily configured to effectively transmit the output power.

According to a second embodiment, the above mentioned tea machine base is incorporated in the tea machine which forms a fully automated tea machine for automatically filling water and dispensing brewed tea.

### Embodiment 2

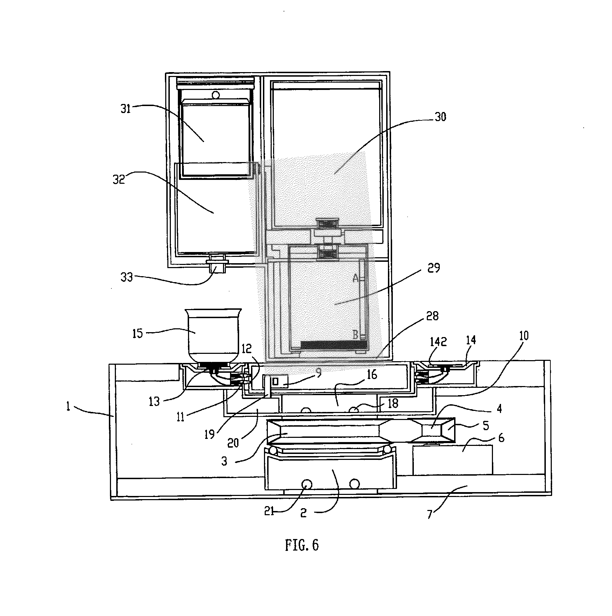

As shown in Fig. 6, the tea machine further comprises a base support 28, a water boiling container 29, a water tank 30, a tea basket 31, a tea infusing container 32, and a tea dispensing outlet 33. The base support 28 is securely supported on the supporting platform 17. The water dispensing outlet 33 is provided at the bottom of the tea infusing container 32 and is aligned with the cup holder 14 for dispensing brewed tea from the tea infusing container 32 to the tea cup 15 when the tea cup 15 is placed on the cup holder 14. The structural configuration of the tea machine is disclosed in China Patent Application No. 201010256065.4, filed August 17, 2010.

The working principle and the operation is shown as follow:

(A) After placing the tea cup 15 is placed on the cup holder 14, the permanent magnet 151 of the tea cup 15 is magnetically attracted to the magnetic member 142 of the cup holder 14.

(B) The control circuit will determine whether the brewing process of the brewed tea in the tea infusing container 3 is completed.

(C) When the power of the tea machine base is switched on, the electric motor 6 is activated to drive the turntable 10 to rotate through the transmission unit. When the positioning contact terminal 19 contacts with the positioning switch 9, the control circuit will deactivate the electric motor 6, such that the turntable 10 will stop rotating. At the same time, the first terminal heads 11 are aligned and contacted with the second terminal heads 12.

(D) The control circuit will determine whether the tea cup 15 is placed on the cup holder 14 or not via the magnetic switch 13. When the magnetic switch 13 is activated, the control circuit will confirm the tea cup 15 being placed on the respective cup holder 14. The control circuit will stop the rotation of the turntable 10. If the magnetic switch 13 is not activated, the control circuit will confirm that no the tea cup 15 is placed on the respective cup holder 14. Therefore, the turntable 10 will be kept rotating.

(E) The tea dispensing outlet 33 is controllably actuated for dispensing the brewed tea in the tea infusing container 32 to the detected tea cup 15 via the execution signal of the control circuit. After the preset dispensing time, the dispensing outlet 33 is controllably closed for stop dispensing the brewed tea to the detected tea cup 15 via the execution signal of the control circuit. After the dispensing process is completed, the turntable 10 is driven to rotate again at one direction for dispensing the brewed tea to the next detected tea cup 15.

(F) The control circuit will verify whether the turntable 10 is rotated at one full revolution for verifying all positions of the cup holders 14. If the turntable 10 is not rotated at one full revolution, the turntable 10 is controllably rotated at one direction and is stopped at one full revolution. For example, when there is six positioning contact terminal 19, the control circuit will count the positioning switch 9 contacting with the six positioning contact terminal 19. After counting to the sixth time, the turntable 10 will be rotated at one full revolution and will be stopped. The electric motor 6 is then deactivated and the counter of the control circuit will be initialized as zero.

In particular, in the step (E), the turntable 10 being kept rotating refers to the turntable 10 being rotated at the same direction.

### Embodiment 3

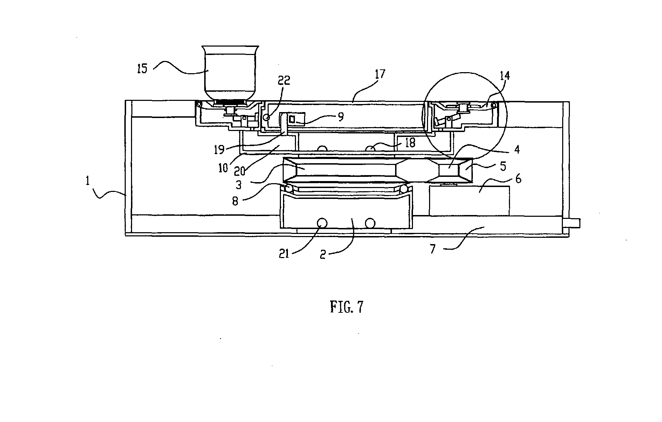

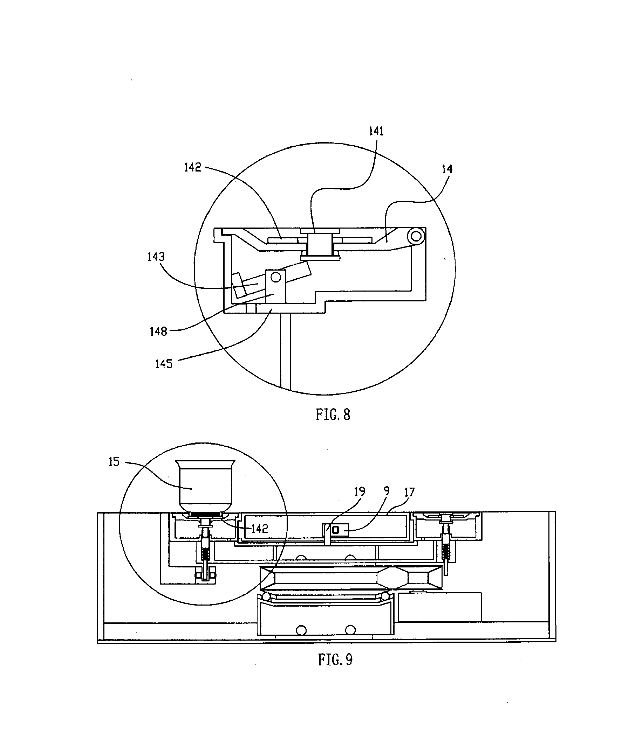

As shown in Figs. 7 and 8, a tea machine according to a third embodiment illustrates an alternative mode of the above first embodiment, which has a different tea cup detection to determine whether there is any tea cup 15 on the cup holder 14.

As shown in Fig. 8, the cup holding bases 145 are formed on the top side of the turntable 10, wherein the cup holders 14 are supported at the cup holding bases 145 respectively. The turntable 10 further comprise a supporting post 148 upwardly extended from the cup holding base 145, a pivot arm 143 pivotally coupled at the supporting post 148, and an actuating member 141 movably supported at the cup holder 14, wherein one end of the pivot arm 143 is contacted with and supported underneath the actuating member 141 to define an actuating end, and an opposed end of the pivot arm 143 provided with a magnetic element, such as magnet, to form a magnetic end. The weight of the magnetic end of the pivot arm 143 is heavier than the actuating end thereof. The turntable 10 further comprises a sensor switch 22 provided at the supporting platform 17, preferably at the surrounding wall thereof. When the tea cup 15 is not placed on the cup holder 14, the magnetic end of the pivot arm 143 is normally dropped down at a lowest position. When the tea cup 15 is place on the cup holder 14, the actuating member 141 is moved down to push the actuating end of the actuating member 141 downwardly. As a result, the magnetic end of the pivot arm 143 is pivotally lifted up to align with the sensor switch 22 so as to activate the sensor switch 22.

According to the second embodiment, the actuating member 141 movably supported at the cup holder 14 at a center thereof.

The working principle and the operation is shown as follow:

When the tea cup 15 is place on the cup holder 14, the actuating member 141 is moved down to push the actuating end of the actuating member 141 downwardly, such that the magnetic end of the pivot arm 143 is pivotally lifted up to align with the sensor switch 22 so as to activate the sensor switch 22. Accordingly, the pivot arm 143 is pivotally moved at a horizontal position to activate the sensor switch 22. Therefore, the control circuit will confirm there is the tea cup 15 on the cup holder 14. When the tea cup 15 is removed from the cup holder 14, the magnetic end of the actuating member 141 is automatically dropped down by its own weight. Furthermore, a resilient element, such as a compression spring, can be supported at the actuating member 141, preferably underneath the actuating end thereof, in order to apply the upward force to the actuating end of the actuating member 141 if the magnetic end thereof is not heavy enough.

### Embodiment 4

As shown in Figs. 7 and 8, a tea machine according to a fourth embodiment illustrates an alternative mode of the above third embodiment, wherein the tea machine of the fourth embodiment includes all components of the third embodiment expect the tea cup detection to determine whether there is any tea cup 15 on the cup holder 14.

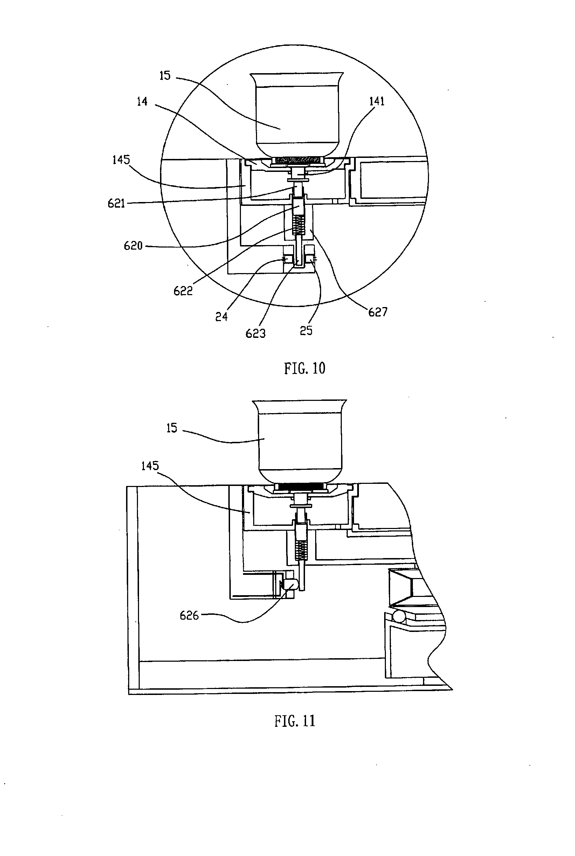

As shown in Fig. 10, the cup holding bases 145 are formed on the top side of the turntable 10, wherein the cup holders 14 are supported at the cup holding bases 145 respectively. The turntable 10 further comprises a movable post 141 downwardly extended from the cup holder 14, preferably at the center thereof. The turntable 10 further comprises a guiding seat 627, having a tubular structure, supported underneath the cup holding base 145, and a guiding member 620 which is downwardly extended from the cup holding base 145 and is coaxially and slidably extended through the guiding seat 627, such that the up-and-down sliding movement of the guiding member 620 is guided by the guiding seat 627. A resilient element 622 is disposed in the guiding seat 627 and is coaxially coupled with the guiding member 620 for applying an upward pushing force against the guiding member 620, so as to move the guiding member 620 back to its original position. The upper end of the guiding member 620 contacts with the bottom end of the movable post 141. The turntable 10 further comprises a sensor unit supported thereunder for detecting a downward movement of the guiding member 620, wherein the sensor unit comprises a signal transmission unit. In particular, the sensor unit comprises a signal transmitter 24, preferably an infrared transmitter, and a signal receiver 25, preferably an infrared receiver, communicatively linked to the signal transmitter 24. A second blocking member 623 is downwardly extended from the guiding member 620, wherein when the guiding member 620 is downwardly moved by the weight of the tea cup 15, the second blocking member 623 is driven to move downward and is positioned between the signal transmitter 24 and the signal receiver 25.

In order to enhance the pairing structure between the movable post 141 and the guiding member 620, a bearing 621 is provided between the upper end of the guiding member 620 and the bottom end of the movable post 141.

The working principle and the operation is shown as follow:

When the tea cup 15 is place on the cup holder 14, the movable post 141 is pushed downwardly to correspondingly drive the guiding member 620 moving downward. At the same time, the resilient element 622 is compressed. The second blocking member 623 is driven by the downward movement of the guiding member 620 to move downward and is positioned between the signal transmitter 24 and the signal receiver 25. Therefore, the signal transmission between the signal transmitter 24 and the signal receiver 25 is blocked by the second blocking member 623, wherein the signal receiver 25 will not receive any signal from the signal transmitter 24. As a result, the control circuit will receive signal from the signal receiver 25 and will confirm the tea cup 15 being placed on the respective cup holder 14. On the other hand, when the signal receiver 25 receives the signal from the signal transmitter 24, i.e. the signal is not blocked by the second blocking member 623, the control circuit will confirm there is no tea cup 15 being placed on the respective cup holder 14.

### Embodiment 5

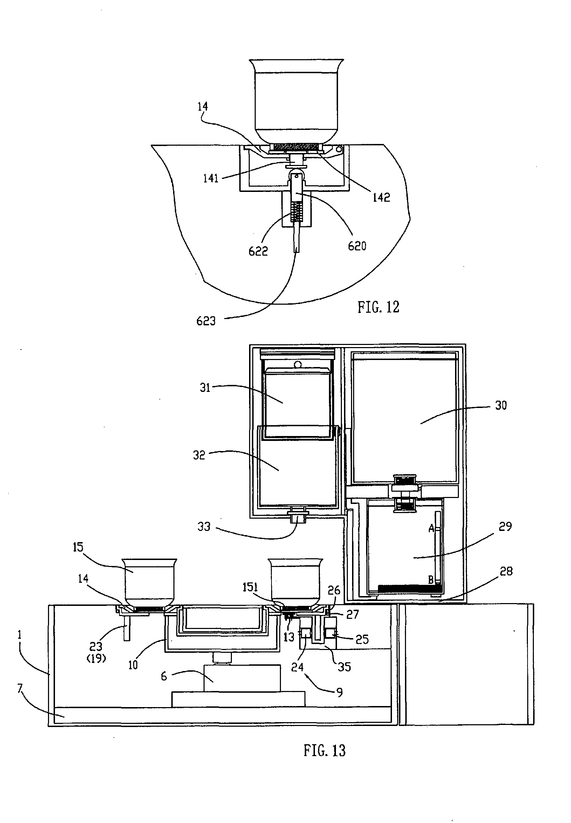

As shown in Figs. 11 and 12, a tea machine according to a fifth embodiment illustrates an alternative mode of the above fourth embodiment, wherein the tea machine of the fourth embodiment includes all components of the third embodiment expect the sensor unit to determine whether there is any tea cup 15 on the cup holder 14. According to the fifth embodiment, the sensor unit comprises a touch switch 626, wherein when the guiding member 620 is driven to move downward, the guiding member 620 will contact with the touch switch 626 so as to activate the touch switch 626. Accordingly, the touch switch 626 can be selectively supported at different locations to contact with different portions of the guiding member 620. For example, the touch switch 626 can be contacted with the bottom side of the guiding member 620 or with the lateral side guiding member 620 when the guiding member 620 is moved downwardly.

The working principle and the operation is shown as follow:

As shown in Fig. 12, when the tea cup 15 is place on the cup holder 14, the movable post 141 is pushed downwardly to correspondingly drive the guiding member 620 moving downward. At the same time, the resilient element 622 is compressed. The second blocking member 623 is driven by the downward movement of the guiding member 620 to move downward and is contacted with the touch switch 626. As a result, the control circuit will receive signal from the touch switch 626 and will confirm the tea cup 15 being placed on the respective cup holder 14.

### Embodiment 6

As shown in Fig. 13, a tea machine base according to a sixth embodiment illustrates an alternative mode of the first embodiment, wherein the tea machine base comprises an outer casing 1, an electric motor 6 disposed in the outer casing 1, a water reservoir 7 at a bottom side of the outer casing 1, a turntable 10, a securing base 35 having a U-shaped cross section supported in the outer casing 1, and a control circuit. The turntable 10 is operatively coupled at the output shaft of the electric motor 6. Preferably, the output shaft of the electric motor 6 is coupled at a center of the turntable 10. The turntable 10 comprises a plurality of cup holders 14, preferably six cup holders, provided on the top side of the turntable 10, and a plurality of positioning contact terminals 19, wherein the number of positioning contact terminal 19 matches with the number of cup holders 14. The turntable 10 further comprises a positioning switch 9 provided at the securing base 35 to align with the positioning contact terminal 19. According to the sixth embodiment, the positioning contact terminals 19 are embodied as a plurality of first blocking members 23. The positioning switch 9 comprises a signal transmitter 24 and a signal receiver 25 supported at the securing base 35 respectively, wherein the operation of the first blocking members 23 with respect to the signal transmitter 24 and the signal receiver 25 is the same as it is mentioned above.

The tea machine base further comprises at least a tea cup 15 which comprises a permanent magnet 151 provided at the bottom side of the tea cup 15. A magnetic switch 13, which is preferably an electromagnetic switch, is provided at the securing base 35.

When the tea cup 15 is fully filled with the brewed tea, the tea cup 15 may be accidentally tilted that the brew tea may be leaked out of the tea cup 15 during the rotation of the turntable 10. In order to prevent the tea cup 15 from being tilted by the centrifugal force when the turntable 10 is rotated, the turntable 10 further comprises a supporting handle 26 extended around an outer side of the surrounding wall of the cup holder 14 and a supporting block 27 extended from an inner side of the surrounding wall of the securing base 35, wherein the supporting handle 26 is supported on the supporting block 27 to prevent the tea cup 15 from being flipped over or tilted when the turntable 10 is rotated. Furthermore, in order to prevent the tea cup 15 from being moved unintentionally by the centrifugal force when the turntable 10 is rotated, the cup holder 14 can be made of magnetized stainless steel material to magnetically attract the permanent magnet 151 of the tea cup 15.

### Embodiment 7

According to a seventh embodiment, the above mentioned tea machine base is incorporated in the tea machine which forms a fully automated tea machine for automatically filling water and dispensing brewed tea.

As shown in Fig. 13, the tea machine further comprises a water tank 30, a water boiling container 29, a tea basket 31, a tea infusing container 32, and a tea dispensing outlet 33. The water dispensing outlet 33 is provided at the bottom of the tea infusing container 32 and is aligned with the cup holder 14 for dispensing brewed tea from the tea infusing container 32 to the tea cup 15 when the tea cup 15 is placed on the cup holder 14. The structural configuration of the tea machine is disclosed in China Patent Application No. 201010256065.4, filed August 17, 2010.

By combining the seventh embodiment and the fifth embodiment, the working principle and the operation is shown as follow:
(A) After placing the tea cup 15 is placed on the cup holder 14, the permanent magnet 151 of the tea cup 15 is magnetically attracted to the magnetic member 142 of the cup holder 14.
(B) The control circuit will determine whether the brewing process of the brewed tea in the tea infusing container 3 is completed.
(C) When the power of the tea machine base is switched on, the electric motor 6 is activated to directly drive the turntable 10 to rotate. When the first blocking member 23 is driven to move at the securing base 35, i.e. between the signal transmitter 24 and the signal receiver 25, the signal transmission between the signal transmitter 24 and the signal receiver 25 is blocked by the first blocking member 23, wherein the signal receiver 25 will not receive any signal from the signal transmitter 24. As a result, the control circuit will receive signal from the signal receiver 25 and will deactivate the electric motor 6 to stop the rotation of the turntable 10. At the same time, the supporting handle 26 is supported on the supporting block 27.
(D) The control circuit will determine whether the tea cup 15 is placed on the cup holder 14 or not via the magnetic switch 13. When the magnetic switch 13 is activated, the control circuit will confirm the tea cup 15 being placed on the respective cup holder 14, so as to precede the following step. The control circuit will stop the rotation of the turntable 10. If the magnetic switch 13 is not activated, the control circuit will confirm that no the tea cup 15 is placed on the respective cup holder 14. Therefore, the turntable 10 will be kept rotating.
(E) The tea dispensing outlet 33 is controllably actuated for dispensing the brewed tea in the tea infusing container 32 to the detected tea cup 15 via the execution signal of the control circuit. After the preset dispensing time, the dispensing outlet 33 is controllably closed for stop dispensing the brewed tea to the detected tea cup 15 via the execution signal of the control circuit. After the dispensing process is completed, the turntable 10 is driven to rotate again at one direction for dispensing the brewed tea to the next detected tea cup 15.
(F) The control circuit will verify whether the turntable 10 is rotated at one full revolution for verifying all positions of the cup holders 14. If the turntable 10 is not rotated at one full revolution, the turntable 10 is controllably rotated at one direction and is stopped at one full revolution. For example, when there is six positioning contact terminal 19, the control circuit will count the positioning switch 9 contacting with the six positioning contact terminal 19. After counting to the sixth time, the turntable 10 will be rotated at one full revolution and will be stopped. The electric motor 6 is then deactivated and the counter of the control circuit will be initialized as zero.

In particular, in the step (E), the turntable 10 being kept rotating refers to the turntable 10 being rotated at the same direction.

### Embodiment 8

As shown in Fig 14, a tea machine according to an eighth embodiment illustrates an alternative mode of the above sixth embodiment, wherein the tea machine of the eighth embodiment includes all components of the sixth embodiment expect the first blocking member 23 being replaced by a permanent magnet 151 and the positioning switch 9 being replaced by an electromagnetic switch 13 at the securing base 35.

### Embodiment 9

As shown in Fig 15, a tea machine according to a ninth embodiment illustrates an alternative mode of the above seventh embodiment, wherein the tea machine of the ninth embodiment includes all components of the seventh embodiment expect a plurality of electromagnetic switches 13, preferably six electromagnetic switches, being coupled at the cup holders 14, preferably six cup holders, respectively. The second terminal heads 12 are provided at the inner side of the securing bases 35 respectively and are operatively linked to the control circuit, wherein two first terminal heads 11 are extended from the magnetic switch 13 to contact with the second terminal heads 12.

One skilled in the art will understand that the embodiment of the present invention as shown in the drawings and described above is exemplary only and not intended to be limiting.

## Claims

1. A tea machine base, comprising: an electric motor (6), a turntable (10), wherein an output shaft of said electric motor (6) is coupled at said turntable (10), wherein said turntable (10) comprises at least two cup holders (14) provided on a top side of said turntable (10),
**characterized in that** said tea machine base further comprises a securing base (35) having a U-shaped cross section, a plurality of positioning contact terminals (19), wherein the number of said positioning contact terminals (19) matches with the number of said cup holders (14), wherein said turntable (10) further comprises a positioning switch (9) provided at said securing base (35) to align with said positioning contact terminal (19).

2. The tea machine base, as recited in claim 1, wherein said turntable (10) further comprises a supporting handle (26) extended around an outer side of a surrounding wall of said cup holder (14) and a supporting block (27) extended from an inner side of a surrounding wall of said securing base (35), wherein said supporting handle (26) is supported on said supporting block (27).

3. The tea machine base, as recited in claim 1 or 2, further comprising at least a tea cup (15) which comprises a permanent magnet (151) provided at a bottom side of said tea cup (15), and a magnetic switch (13) provided at one of said cup holder (14) and said securing base (35).

4. The tea machine base as recited in claim 3, wherein the magnetic switch (13) is an electromagnetic switch provided at the securing base (35).

5. The tea machine base as recited in any one of preceding claims, wherein the positioning contact terminals (19) comprise a plurality of blocking members (23) or a plurality of permanent magnets (151).

6. The tea machine base as recited in any one of preceding claims, wherein the positioning switch (9) comprises a signal transmitter (24) and a signal receiver (25) supported at the securing base (35) respectively.

7. The tea machine base as recited in claim 3, wherein the cup holder (14) is made of magnetized stainless steel material to magnetically attract the permanent magnet (151) of the tea cup (15).

8. The tea machine base as recited in any one of preceding claims, wherein the positioning switch (9) is an electromagnetic switch (13) at the securing base (35).

9. A device comprising a tea machine incorporating a tea machine base according to any one of preceding claims.

## Patentansprüche

1. Eine Basis der Teemaschine, bestehend aus: einem elektrischen Motor (6), ein Drehtisch (10), wobei eine Antriebswelle des genannten Elektromotors (6) am genannten Drehtisch (10) verbunden ist, wobei das genannte Drehtisch (10) aus mindestens zwei Becherhalter (14) besteht, die sich auf den oberen Teil des Drehtischs (10) befinden, charakterisiert dadurch, dass die genannte Teemaschine zusätzlich noch eine Sicherungsbasis (35) mit einem U-förmigen Querschnitt, eine Vielzahl an Anschlusskontakten (19) hat, wobei die Anzahl der genannten Anschlusskontakten (19) mit der Anzahl der Becherhalter (14) übereinstimmt, wobei das genannte Drehtisch (10) zusätzlich noch einen Positionsschalter (9), dass sich au der genannten Sicherungsbasis (35) befindet, um die genannten Positions-Anschlusskontakten (19) auszurichten.

2. Die Basis der Teemaschine, so wie sie unter Anspruch 1 angegeben wurde, beinhaltet zusätzlich zum Drehtisch (10) einen Tragegriff (26) erweitert um die äußere Seite der umliegenden Wand des genannten Becherhalter (14) und ein Stützblock (27) erweitert von der inneren Seite der umliegenden Wand der genannten Sicherungsbasis (35), wobei der Tragegriff (26) von dem genannten Stützblock (27) gesichert wird.

3. Die Basis der Teemaschine, so wie sie unter Ansprüchen 1 und 2 angegeben wurde, beinhaltet zusätzlich mindestens einen Teebecher (15), dass aus einen permanenten Magneten (151), im unteren Bereich des Teebechers (15) und einem magnetischen Schalter (13), befestigt auf den Becherhalter (14) und der Sicherungsbasis (35) besteht.

4. Die Basis der Teemaschine, so wie sie unter Anspruch 3 angegeben wurde, beinhaltet einen magnetischen Schalter (13) in der Ausführung als elektromagnetischer Schalter, befestigt auf der Sicherungsbasis (35).

5. Die Teemaschine, so wie sie in den vorherigen Ansprüchen beschrieben wurde, wobei die Positions-Anschlusskontakten (19) aus einer Vielzahl Blockierelemente (23) oder eine Vielzahl permanenter Magnete besteht (151).

6. Die Basis der Teemaschine, so wie sie in den vorherigen Ansprüchen beschrieben wurde, wobei die Positions-Anschlusskontakten (9) aus einen Signalsender (24) einen Signalempfänger (25) unterstützt von einer Sicherungsbasis (35) besteht.

7. Die Basis der Teemaschine, so wie sie unter Anspruch 3 angegeben wurde, wobei der Becherhalter (14) aus magnetisierten Edelstahl hergestellt ist, um den permanenten Magneten (151) des Teebechers (15) anzuziehen, besteht.

8. Die Basis der Teemaschine, so wie sie unter de vorigen Ansprüchen angegeben wurde, beinhaltet den Positionsschalter (9) der ein elektromagnetischer Schalter (13), befestigt auf der Sicherungsbasis (35).

9. Ein Gerät bestehend aus einer Teemaschine, dass eine Basis für eine Teemaschine hat, entsprechend den vorherigen Angaben.

## Revendications

1. Une base de machine à thé, comprenant : un moteur électrique (6), une plaque tournante (10), dont il sort du susdit moteur électrique un arbre de sortie (6) couplé à la plaque tournante sur-mentionnée (10), alors que la susdite plaque tournante (10) comprend au moins deux porte-gobelets (14) sur la partie supérieure de la dite plaque tournante (10),
Il est requis que la base de la dite machine à thé doit de surcroît comprendre une base servant à la fixation (35) pourvue d'une section transversale en forme de U, et plusieurs terminaux de contact de position (19), alors que le nombre des susdits terminaux de contact de position (19) doit se correspondre avec le nombre des susdits porte-gobelets (14), alors que la susdite table tournante (10) doit en plus inclure un interrupteur de position (9) situé par rapport à la susdite base de fixation (35) lui permettant l'alignement avec le terminal de contact de position (19).

2. La base de la machine à thé, tel que cela est établi sur la demande 1, dont la susdite plaque tournante (10) doit comprendre de surcroît une poignée de soutien (26) qui s'étend autour de la partie extérieure de la paroi qui entoure le susdit porte-gobelet (14) et un bloc de support (27) qui doit s'étendre depuis la partie intérieure de la paroi qui entoure la dite base de fixation (35), alors que la susdite poignée de soutien (26) est fixée au dit bloc de support (27).

3. La base de la machine à thé, tel que cela est établi sur la demande 1 ou la 2, doit comprendre au moins une tasse de thé (15) qui doit comprendre un aimant permanent (151) fixé à la base de la susdite tasse de thé (15), et un interrupteur magnétique (13) fixé a un des dits porte-gobelets (14) et la susdite base de fixation (35).

4. La machine à thé, tel que cela est établi dans la demande 3, alors que l'interrupteur magnétique (13) est un interrupteur électromagnétique inclut dans la base de fixation (35).

5. La machine à thé, tel que cela est décrit dans n'importe laquelle des demandes précédentes, alors que les terminaux des contacts de positionnement (19) comprennent une pluralité d'éléments de blocage (23) ou une pluralité d'aimants permanents (151).

6. La machine à thé, tel que cela est décrit dans n'importe laquelle des demandes précédentes, alors que l'interrupteur de position (9) comprend un émetteur de signaux (24) et un récepteur de signaux (25) fixé sur la base de soutien (35), respectivement.

7. La base de la machine à thé, tel que cela est spécifié dans la demande 3, alors que le porte-gobelets (14) est fabriqué en matériel d'acier inoxydable dans le but d'attirer l'aimant permanent (151) de la tasse thé (15).

8. La base de la machine à thé, tel que cela est décrit dans n'importe laquelle des demandes antérieures, alors que l'interrupteur de position (9) est un interrupteur électromagnétique (13) fixé à la base de support (35).

9. Un dispositif comprenant une machine à thé comprenant la base d'une machine à thé selon n'importe laquelle des spécifications précédentes.
